# EUROPÄISCHE PATENTSCHRIFT

(11) **EP 4 348 775 B1**
(45) Veröffentlichungstag und Bekanntmachung des Hinweises auf die Patenterteilung: **11.12.2024**
(21) Anmeldenummer: 22726033.8
(22) Anmeldetag: 27.04.2022
(51) Int. Cl.: H01R 43/28, H01R 43/02, B23K 37/04, B23K 26/38, B23K 26/32, B23K 26/26, B23K 26/244, B23K 101/32, B23K 101/38

(54) **VERFAHREN UND VORRICHTUNG ZUM BEARBEITUNG EINES ELEKTRISCHEN LEITERS**
METHOD AND DEVICE FOR PROCESSING AN ELECTRICAL CONDUCTOR
PROCÉDÉ ET DISPOSITIF DE TRAITEMENT D'UN CONDUCTEUR ÉLECTRIQUE

(30) Priorität: 26.05.2021 DE 102021113513
(43) Veröffentlichungstag der Anmeldung: 10.04.2024
(73) Patentinhaber: Auto-Kabel Management GmbH, 79688 Hausen i.W. (DE)
(72) Erfinder: REDDER, Marie, 9642 Ebnat-Kappel (CH); BITNER, Urszula, 10247 Berlin (DE); SEBETLELA, Kabelo, 84028 Landshut (DE)
(74) Vertreter: Cohausz & Florack
(86) Internationale Anmeldenummer: PCT/EP2022/061192
(87) Internationale Veröffentlichungsnummer: WO 2022/248149

(56) Entgegenhaltungen:
- US-A1- 2010 270 275

## Beschreibung

Der Gegenstand betrifft ein Verfahren sowie eine Vorrichtung zum Bearbeiten eines elektrischen Leiters. Insbesondere betrifft der Gegenstand ein Verfahren zum Bearbeiten eines Leiterendes, insbesondere zum Vorbereiten eines Leiterendes für ein anschließendes Verschweißen mit einem Anschlussteil. Darüber hinaus betrifft der Gegenstand ein Verfahren zum Verschweißen eines Leiters mit einem Anschlussteil.

Das Verschweißen von Litzenleitern mit Anschlussteilen, beispielsweise Flachteilen, Kabelschuhen, Anschlusshülsen oder dergleichen, ist hinlänglich bekannt. Zu den bekanntesten Schweißverfahren zählen das Widerstandsschweißen, das Reibschweißen sowie das Laserschweißen. Insbesondere beim Laserschweißen muss die Stirnseite des Litzenleiters für ein stumpfes Verschweißen des Leiterendes mit einem Anschlussteil möglichst eben sein.

Ein Leiter, welcher im Sinne dieser Anmeldung verschweißt werden soll, ist ein Litzenleiter. Dieser ist aus einer Mehrzahl an Litzen gebildet. Die Litzen können dabei unverdrillt, verdrillt, verseilt, verwoben oder sonst wie geordnet oder ungeordnet zueinander angeordnet sein. Insbesondere kann auch ein Leitergeflecht aus Litzen zum Einsatz kommen. Der Litzenleiter kann einen flachen oder runden Leiterquerschnitt haben.

Zur Vorbereitung des Schweißprozesses wird ein Kabel vorzugsweise an einem Ende abisoliert, so dass ein blankes Leiterende vorliegt. Auch kann das Kabel mittig abisoliert werden, so dass beidseitig der abisolierten Bereiche die Isolation des Kabels anliegt. Wenn der Leiter dann im abisolierten Bereich durchtrennt wird, liegt ebenso ein blankes Leiterende vor.

Die im abisolierten Bereich angeordneten Litzenenden müssen für den anschließenden Schweißprozess, insbesondere für einen Stumpfstoß, in ein gewünschtes Querschnittsprofil gebracht werden. Dieses Profil ist häufig kongruent zu dem Profil des zu verschweißenden Anschlussteils. Dies kann insbesondere ein mehreckiges, insbesondere rechteckiges oder quadratisches Profil sein.

In herkömmlichen Verfahren werden die Litzen am Leiterende zueinander kompaktiert, d.h. mechanisch aneinander gedrückt, so dass Zwischenräume zwischen den Litzen verkleinert oder eliminiert werden. Durch diesen Prozess entsteht an der zu verschweißenden Stirnfläche ein ungeordnetes Litzenbild, d.h. die einzelnen Litzen stehen unterschiedlich weit von einer gedachten Stirnebene hervor oder von dieser zurück. Es bildet sich somit keine ebene Stirnfläche, die mittels Laserschweißen verschweißt werden könnte.

Die unterschiedlich weit hervorstehenden Einzellitzen führen bei einem Stumpfstoß zu nur kleinen, nicht zusammenhängenden Berührungsflächen zwischen den Litzenenden und dem Anschlussteil, da nur einige der Litzen ausreichend weit hervorstehen, um in Berührung mit dem Anschlussteil zu kommen. Da nur wenige Litzen in unmittelbaren Kontakt mit dem Anschlussteil sind, kann es bei einem anschließenden Laserschweißprozess dazu kommen, dass zu wenig zu verschweißendes Material zur Herstellung einer kontinuierlich verlaufenden Schweißnaht zu r Verfügung steht. Außerdem kommt es nur zwischen einzelnen Litzen und dem Anschlussteil zu einem unmittelbaren Kontakt und die Querschnittsfläche der Schweißnaht ist gegenüber der Querschnittsfläche des Anschlussteils verringert und undefiniert. Dies ist einerseits nachteilig hinsichtlich der mechanischen Langzeitstabilität der Verbindung, andererseits hinsichtlich des elektrischen Übergangswiderstandes. Insbesondere aufgrund eines erhöhten elektrischen Übergangswiderstandes kommt es zum erhöhten joulschen Verlusten und somit erhöhtem Wärmeeintrag, der letztendlich zur Beschädigung der Schweißnaht führen kann.

Zur Herstellung einer kontinuierlichen Laserschweißnaht mit einer ausreichend großen Fügefläche ist es daher notwendig, die Stirnfläche der kompaktierten Litzen durch geeignete Fertigungsverfahren zu entgraten. Heutzutage geschieht dies durch Fräsen, Sägen oder Stanzen der bereits kompaktierten Litzen am Leiterende, so dass eine ebene Stirnfläche gebildet wird. Diese ebene Stirnfläche stellt eine ausreichend große und verlässliche Fügefläche zur Verfügung, um ein Verschweißen mit einem Anschlussteil zu ermöglichen.

Nachteilig bei dem bekannten Verfahren ist die Vielschrittigkeit der Leitervorbereitung mit diversen Werkzeugen. Der Leiter muss blank zur Verfügung gestellt werden, d.h. bei einem Kabel muss das Leiterende mit einem ersten Werkzeug abisoliert werden. Anschließend müssen die Litzen an einem stirnseitigen Ende mit einem zweiten Werkzeug kompaktiert werden. Daraufhin muss in einem weiteren Bearbeitungsschritt die Stirnseite mit einem dritten Werkzeug wie zuvor beschrieben entgratet werden, um eine ebene Fügefläche zu schaffen. Diese vielen Schritte mit den diversen Werkzeugen führen zu erheblichen Mehrkosten einer Laserschweißnaht gegenüber beispielsweise einer Widerstandsschweißnaht.

Die US 2010/0270275 A1 bezieht sich auf ein Verfahren zum Verschweißen einer Elektrode und einer Kabelseele miteinander durch Bestrahlung mit einem Laserstrahl.

Dem Gegenstand lag nunmehr die Aufgabe zugrunde, ein Leiterende für das Laserschweißen mit möglichst wenigen Arbeitsschritten vorzubereiten.

Es ist erkannt worden, dass die Laserstrahlquelle dazu eingesetzt werden kann, sowohl den Schritt des Kompaktierens als auch den Schritt des Vorbereitens der Stirnfläche durchzuführen, so dass nicht zwei verschiedene Werkzeuge, wie bisher, das Leiterende bearbeiten müssten, sondern dass mit einem einheitlichen Werkzeug das Leiterende vollständig für das Verschweißen vorbereitet und gegebenenfalls anschließend auch noch verschweißt werden kann.

Gegenständlich wird daher vorgeschlagen, ein blankes Leiterende eines Litzenleiters bereit zu stellen. Ein Leiterende ist ein Bereich an einem stirnseitigen Ende des Leiters. Ist der Leiter in einem Kabel, so kann die Isolation am Kabelende entfernt werden, so dass am abisolierten Kabel der blanke Leiter vorliegt.

Gegenständlich wird weiter vorgeschlagen, dass die Litzen des blanken Leiterendes von Greifbacken zumindest teilweise umlaufend umgriffen werden. Greifbacken können relativ zueinander, aufeinander zu und voneinander weg bewegt werden. Greifbacken können in Form von Greifarmen, Seitenschiebern oder dergleichen gebildet sein. Greifbacken können mehrteilig, insbesondere zwei-, drei-, vierteilig sein. Die Greifbacken können Teil einer Greifvorrichtung sein. Die Greifbacken können, wie nachfolgend noch gezeigt werden wird, Teil einer Laserschweißvorrichtung sein und beispielsweise in einer Vorrichtung zusammen mit einer Laserstrahlquelle kombiniert sein. Die Greifbacken umgreifen das Leiterende zumindest teilweise umlaufend, bevorzugt vollständig umlaufend. Dabei umgreifen die Greifbacken die Litzen eines stirnseitigen Leiterendes, welches blank bereitgestellt wurde, um die Litzen anschließend zu kompaktieren. Beim Umgreifen werden bevorzugt alle Litzen des Leiterendes durch die Greifbacken umgriffen. Beim Umgreifen werden die Litzen bevorzugt ringförmig umgriffen.

Die Greifbacken werden anschließend aufeinander zu bewegt, so dass die sich zwischen den Greifbacken befindenden Litzen mechanisch in einer radialen Richtung gestaucht werden. Die Litzen werden zusammengedrückt, so dass Zwischenräume zwischen den Litzen verkleinert, minimiert, insbesondere eliminiert werden. Durch die Greifbacken werden die umgriffenden Litzen zumindest teilweise kompaktiert, wobei Kompaktierungsgrade von über 90% möglich sind. Im nicht kompaktierten Zustand sind zwischen den Litzen Zwischenräume, die z.B. mit Luft gefüllt sind. Durch das Kompaktieren werden die Litzen aufeinander zu bewegt und die Zwischenräume verkleinert. Das Verhältnis zwischen Material von Litzen und Material ohne Litzen kann als Kompaktierungsgrad verstanden werden. Dieser liegt bevorzugt über 90%, bevorzugt über 95%.

Wie eingangs bereits erläutert, ist eine Laserstrahlquelle für das Laserverschweißen ohnehin vorgesehen. Diese Laserstrahlquelle kann nun verwendet werden, um die kompaktierten Litzen im Bereich der Greifbacken durch die Greifbacken hindurch miteinander zu verschweißen. Somit kann die Laserstrahlquelle bereits dazu genutzt werden, die kompaktierten Leiterenden zumindest teilweise stoffschlüssig miteinander zu verbinden. Die Litzen können durch die Laserstrahlquelle, durch die Greifbacken hindurch, zumindest an ihren Oberflächen zumindest teilweise aufgeschmolzen werden, so dass die Litzen zumindest an ihren Oberflächen zumindest teilweise miteinander verschweißt werden. Es entsteht somit ein Schweißknoten, während die Litzen noch durch die Greifbacken miteinander verpresst sind. Dadurch, dass während die Laserstrahlquelle durch die Greifbacken hindurch die Litzen miteinander verschweißt, diese durch die Greifbacken räumlich zueinander fest angeordnet sind, ergibt sich ein ebenes Schweißbild. Die Anordnung der Litzen zueinander wird dabei fixiert. Wenn die Greifbacken entfernt werden, bleibt es bei dieser Anordnung.

Gemäß einem Ausführungsbeispiel wird vorgeschlagen, dass die Greifbacken zumindest in Schweißbereichen aus einem für einen aus der Laserstrahlquelle austretenden Laserstrahl zumindest teilweise translustente Material gebildet sind. Ein Schweißbereich kann ein derartiger Bereich sein, in dem die Litzen während sie von den Greifbacken umgriffen sind, verschweißt werden. Die Greifbacken können so gestaltet sein, dass sie in zumindest den Schweißbereichen aus einem für den Laserstrahl transluszenten Material gebildet sind. Die Laserstrahlquelle kann so eingestellt werden, dass ein Fokuspunkt auf den Litzen hinter den Greifbacken liegt, so dass sichergestellt wird, dass die notwendige Schweißtemperatur an den Litzen erreicht wird.

Durch die Greifbacken hindurch, insbesondere durch das translustente Material hindurch, werden die Litzen miteinander verschweißt und bilden einen Schweißknoten, der nachfolgend bearbeitet werden kann, wie nachfolgend noch beschrieben werden wird.

Der Begriff "durch die Greifbacken hindurch" kann auch so verstanden werden, dass in den Greifbacken innerhalb der Schweißbereiche fensterartige Ausnehmungen vorgesehen sind. Diese fensterartigen Ausnehmungen können durchgehende Ausnehmungen sein. Die Greifbacken sind dann mit Ausnehmung versehen, durch die der Laserstrahl der Laserstrahlquelle unmittelbar auf die Litzen auftreffen kann. D.h., dass der Laserstrahl nicht durch das Material der Greifbacken hindurchtreten muss, sondern unmittelbar auf die Litzen auftrifft. In beiden Fällen entsteht im Schweißbereich ein Stoffschluss zwischen den Litzen.

Gemäß einem Ausführungsbeispiel wird vorgeschlagen, dass die Greifbacken das Leiterende an einem stirnseitigen Ende umgreifen. Das stirnseitige Ende wird somit durch die Greifbacken mechanisch fixiert und der Laserstrahl der Laserstrahlquelle kann durch die Greifbacken hindurch, wie oben beschrieben, die Litzen zumindest teilweise miteinander verschweißen. Am stirnseitigen Ende sind die Litzen zueinander aufgrund der Greifbacken fixiert und eine prozesssichere Schweißnaht kann gebildet werden.

Wie bereits erläutert, können die Greifbacken die Litzen umgreifen. Hierbei können die Greifbacken die Litzen ringförmig, bevorzugt in einem geschlossenen Ring, umgreifen. An der umfangseitigen Mantelfläche der Greifbacken können die Ausnehmungen oder das translustente Material angeordnet sein. Der Laserstrahl kann in einer radialen Richtung durch die Greifbacken hindurch auf die Litzen auftreffen und diese zumindest teilweise miteinander verschweißen. Insbesondere werden zumindest die peripheren Litzen, d.h. die an der äußeren Mantelfläche des Litzenleiters liegenden Litzen miteinander verschweißt. Es ist jedoch auch bevorzugt, dass auch die weiter innen liegenden Litzen aufgrund der durch den Laserstrahl eingetragenen Energie miteinander zumindest teilweise verschweißt werden können. Auch können die Litzen stirnseitig miteinander verschweißt werden.

Gemäß einem Ausführungsbeispiel wird vorgeschlagen, dass die Litzen mit Hilfe der Greifbacken zu einem mehreckigen, insbesondere rechteckigen Querschnittsprofil kompaktiert werden. Der Litzenleiter kann auch ein Rundleiter sein. Mit Hilfe der Greifbacken kann das Querschnittsprofil des Litzenleiters im Bereich der Greifbacken verändert werden. Insbesondere kann ein mehreckiges, bevorzugt rechteckiges oder quadratisches Querschnittsprofil hergestellt werden. Bevorzugt ist, wenn das durch das Kompaktieren erzielte Querschnittsprofil geometrisch ähnlich oder kongruent zu dem Querschnittsprofil des zu verschweißenden Anschlussteils ist. Insbesondere bei einem Stumpfstoß können die Querschnittsprofile der aneinander anliegenden Flächen, die miteinander verschweißt werden, geometrisch ähnlich oder kongruent zueinander sein.

Gemäß einem Ausführungsbeispiel wird vorgeschlagen, dass die kompaktierten Litzen mit Hilfe der Laserstrahlquelle an einander gegenüberliegenden Backen der Greifbacken durch die Greifbacken hindurch miteinander verschweißt werden. Wie bereits erläutert, kann der Laserstrahl in einer radialen Richtung auf die Litzen auftreffen. Um zu erreichen, dass der Schweißknoten möglichst kompakt ist, wird vorgeschlagen, dass nicht nur auf einer Seite der Greifbacken, sondern auf einander gegenüberliegenden Seiten der Greifbacken der Laserstrahl durch die Greifbacken hindurch die Litzen verschweißt. Auch ist bevorzugt, dass an allen Greifbacken jeweils ein Schweißbereich vorgesehen ist, so dass an allen Seitenflächen des kompaktierten Schweißknotens die Litzen zumindest teilweise miteinander verschweißt werden.

Gemäß einem Ausführungsbeispiel wird vorgeschlagen, dass zumindest zwei Schweißbereiche in Längsrichtung des Litzenleiters voneinander beabstandet an den Greifbacken angeordnet sind. Der Leiter erstreckt sich entlang einer Längsachse und hat eine Längsrichtung. Ausgehend von der Stirnfläche erstreckt sich der Leiter in Längsrichtung. Die Schweißbereiche an den Greifbacken können in dieser Längsrichtung beabstandet voneinander an einer Greifbacke vorgesehen sein. Es werden zumindest zwei voneinander beabstandete Schweißbereiche vorgeschlagen. Durch die weiteren Schweißbereiche wird eine erhöhte mechanische Stabilität des Schweißknotens nach dem Verschweißen erzielt.

Wie bereits erläutert, sollen die Litzen durch die Greifbacken kompaktiert werden. Dieses Kompaktieren kann optimiert werden, indem die Greifbacken nach dem Umgreifen, während des Kompaktierens, schwingungsangeregt werden. Durch das Schwingen der Greifbacken, insbesondere mit hochfrequenten Schwingungen, können die losen Verbindungen zwischen den Litzen, sei es ungeordnet, geordnet, verdrillt oder verseilt, aufgelöst werden. Die die Schwingungen führen dazu, dass die Litzen zueinander in ein optimiertes Ordnungsverhältnis gebracht werden, so dass Zwischenräume zwischen den Litzen verkleinert, minimiert oder eliminiert werden. Das Schwingungsanregen führt auch dazu, dass sich die Litzen leichter plastisch verformen, so dass der kompaktierte Bereich der Litzen plastisch verformt ist und ein kompaktierter Knoten gebildet ist, der anschließend zum Laserverschweißen geeignet ist.

Erfindungsgemäß werden die kompaktierten, miteinander verschweißten Litzen nach dem Verschweißen stirnseitig mit Hilfe einer Laserstrahlquelle entgratet. Wie eingangs bereits erläutert, kommt es aufgrund der (z.B. losen, ungeordneten, geordnete, verdrillten oder verseilten) Anordnung der Litzen innerhalb des Litzenleiters dazu, dass wenn diese Litzen kompaktiert werden, ihre Litzenenden unterschiedlich von einer gedachten Stirnfläche abstehen. Um eine ebene Stirnfläche zu erzielen, wird vorgeschlagen, die verschweißten Litzen mit der Laserstrahlquelle zu entgraten. Hierbei wird mit dem Laser der Laserstrahlquelle das über die gedachte Stirnfläche hinausstehende Material der Litzen entfernt und es wird an der gedachten Stirnfläche eine tatsächliche Stirnfläche geschaffen. Laserentgraten als solches ist bekannt und wird daher nicht näher beschrieben.

Besonders vorteilhaft ist es, wenn das Verschweißen und das Entgraten mit Hilfe derselben Laserstrahlquelle durchgeführt werden. Wie eingangs bereits erläutert, ist es besonders vorteilhaft, wenn in ein und demselben Werkzeug ein Kompaktieren und Entgraten stattfinden könnte. Hierzu kann ein und dieselbe Laserstrahlquelle eingesetzt werden. Es ist möglich, den Laserstrahl dieser Laserstrahlquelle den jeweiligen Anforderungen entsprechend neu zu fokussieren. So sind Laserstrahlquellen mit mehr als einem, bevorzugt zwei oder drei Fokuspunkten bekannt, welche variabel einstellbar sind. So ist es denkbar, dass zum Verschweißen der kompaktierten Litzen ein erster Fokuspunkt gewählt wird und zum anschließenden Entgraten ein zweiter Fokuspunkt gewählt wird. Ein und dieselbe Laserstrahlquelle kann so für zwei verschiedene Verfahrensschritte eingesetzt werden, was für den Prozess sehr vorteilhaft ist.

Gemäß einem Ausführungsbeispiel wird vorgeschlagen, dass eine Stirnfläche des Litzenleiters nach dem Entgraten eine Ebenheit von maximal 1mm, bevorzugt von maximal 0,5mm aufweist. Die Ebenheit ist ein Maß für die Abweichung einer Fläche von einer Bezugsebene. Die Bezugsebene steht bevorzugt senkrecht zur Längsachse des Leiters. Eine maximale Abweichung der Stirnfläche von der Bezugsebene ist bei einer Ebenheit von maximal 1mm ebenso 1mm. Je ebener die Stirnfläche, desto problemloser kann diese an das Anschlussteil angelegt und mit diesem stumpf verschweißt werden. Insbesondere im Stumpfstoß wird die entgratete Stirnfläche an das Anschlussteil angelegt und anschließend mit dem Anschlussteil verschweißt. Durch die hohe Ebenheit der Stirnfläche kommt es zu einer großen Kontaktfläche. Diese begünstigt einerseits den Schweißprozess, da dieser sehr gleichmäßig verläuft, andererseits ist auch die verschweißte Fläche ausreichend groß, um den Übergangswiderstand an dem Schweißknoten möglichst gering zu halten.

Gemäß einem Ausführungsbeispiel wird vorgeschlagen, dass die Litzen vor dem Kompaktieren von einer Schneidvorrichtung umfasst werden und an einem stirnseitigen Ende im Wesentlichen plan abgetrennt werden.

Neben dem Entgraten, bevorzugt Laserentgraten nach dem Kompaktieren und Verschweißen, ist es auch möglich, dass eine ebene Stirnfläche vor dem gegenständlichen Verschweißen hergestellt wird. Hierzu wird vorgeschlagen, dass ein Leiter in einem Bereich blank vorliegt. Hierzu kann ein Kabel in einem Endbereich oder einem Mittenbereich von einer Isolation befreit werden, wie zuvor bereits beschrieben. Anschließend wird der Leiter von Greifbacken umgriffen. Dies können Greifbacken einer Schneidvorrichtung sein oder die oben erwähnten Greifbacken. Die Greifbacken können in Längsrichtung beabstandet voneinander sein, so dass in Längsrichtung des Leiters zwei aneinander liegende Bereiche mit einem Spalt durch die Greifbacken gebildet sind und entlang dieses Spalts geschnitten werden kann. Auch ist es möglich, dass die Greifbacken den Leiter umgreifen und an einer Stirnseite der Greifbacken ein Schnitt durchgeführt wird.

In beiden oben genannten Fällen wird vorgeschlagen, dass bei dem Umgreifen die Einzellitzen mechanischen Schwingungen ausgesetzt werden. Hierzu wird die Schneidvorrichtung vor dem Abtrennen der Litzen schwingungsangeregt, insbesondere mit Ultraschall, so dass sich vorhandene Verdrillungen und Verflechtungen der Einzellitzen lösen und diese in eine neue Position "gerüttelt" werden. Das Verhalten der Litzen bei der Schwingungsanregung ist beim Schneiden als auch beim Kompaktieren bevorzugt gleich, so dass die jeweiligen Beschreibungen austauschbar Verwendung finden können.

Die zusammengepressten, kompaktierten Litzen werden mit einer Schneidvorrichtung durchtrennt, so dass eine ebene Trennfläche entsteht. Das Trennen erfolgt derart, dass eine im Wesentlichen plane Stirnfläche mit der oben genannten Ebenheit entsteht.

Die Greifbacken der Schneidvorrichtung können gleichsam Greifbacken der oben beschriebenen Schweißvorrichtung sein. Nach dem Schneiden kann unmittelbar das oben beschriebene Verschweißen der Litzen erfolgen. Auch ist es möglich, dass die Greifbacken der Schneidvorrichtung gelöst werden und die oben beschriebenen Greifbacken angelegt werden. In diesem Fall ist ein Kompaktieren jedoch nicht zwingend notwendig, da dies, wie beschrieben, bereits zuvor erfolgt sein kann.

Durch das Entflechten und Entdrillen der Litzen vor dem Schneiden liegen diese bereits in ihrer endgültigen Position und nach dem Schneiden verrücken diese nicht mehr. So wird erreicht, dass die plane Stirnfläche, die durch das Schneiden erreicht wird, nach dem Schneiden erhalten bleibt. Wenn nun unmittelbar oder in großer zeitlicher Nähe hierzu das Verschweißen der Litzen erfolgt, wie oben beschrieben, wird die Position der Litzen zueinander fixiert.

Mit anderen Worten ist es gegenständlich möglich, zunächst mittels einer Schneidvorrichtung eine ebene Stirnfläche mit einer gegebenen Ebenheit vorzusehen und anschließend die kompaktierten Litzen des Leiterendes zu verschweißen und so deren Position zueinander zu fixieren. Gegenständlich ist es andererseits auch möglich, die Litzen zunächst zu kompaktieren und zu verschweißen und ihrer Position zueinander zu fixieren und anschließend eine ebene Stirnfläche herzustellen. In beiden Fällen erfolgt ein Verschweißen der Litzen zueinander durch die Greifbacken hindurch in der oben beschriebenen Art und Weise.

Beispielsweise ist der Litzenleiter ein Litzengeflecht oder ein Multilitzenleiter. Ein Multilitzenleiter kann, wie oben beschrieben, aus geordneten, ungeordneten, verdrehten, verdrillten, geflochten oder verseilten Litzen gebildet sein.

Gemäß einem Ausführungsbeispiel wird vorgeschlagen, dass nach dem Verschweißen der Litzenleiter mit Hilfe einer Laserstrahlquelle mit seinem verschweißten Leiterende stumpf mit einem Anschlussteil verschweißt wird. Wie oben bereits dargelegt, ist die Stirnfläche des Litzenleiters durch das Schneiden und anschließende Verschweißen oder das Verschweißen und anschließende Entgraten eben. Diese ebene Stirnfläche wird genutzt, um eine Verschweißung mit einem Anschlussteil in einem Stumpfstoß zu ermöglichen. Die ebene Stirnfläche wird dabei gegen das Anschlussteil gedrückt und anschließend mit einer Laserstrahlquelle verschweißt.

Bevorzugt wird dieselbe Laserstrahlquelle verwendet, die zuvor zumindest zum Verschweißen, bevorzugt jedoch auch zum Entgraten benutzt wurde. Hierbei kann die Laserstrahlquelle, wie oben bereits dargelegt, multifokal sein. Dies bedeutet, dass die Laserstrahlquelle einen Laser aufweist, der für verschiedene Anwendungen mit verschiedenen Fokuspunkte eingestellt werde kann. Für das Verschweißen kann somit ein anderer Fokuspunkt gewählt werden, als für das vorherige Verschweißen und/oder Entgraten. Es ist jedoch vorteilhaft, dass genau der selbe Laser genutzt wird, der zuvor für das Verschweißen und gegebenenfalls entgraten genutzt wurde. Somit kann in einem Werkzeug der komplette Schweißvorgang inklusive Vorbereitung des Litzenleiters durchgeführt werden.

Gemäß einem Ausführungsbeispiel wird vorgeschlagen, dass die Laserstrahlquelle multifokal eingestellt wird. In diesem Zusammenhang sei nochmals erwähnt, dass das Verschweißen der Litzen mit einem anderen Fokus erfolgen kann als das optionale Entgraten und das optionale stumpfe Verschweißen mit den Anschlussteil. Unterschiedliche Einstellungen an derselben Laserstrahlquelle ermöglichen es, diese für die genannten verschiedenen Anwendungsfälle zu verwenden und somit das Verschweißen in einem selben Werkzeug zu ermöglichen.

Ein weiterer Aspekt ist eine Bearbeitungsvorrichtung nach Anspruch 13. Die Bearbeitungsvorrichtung hat eine Bereitstellungseinrichtung, mit der ein blanker Leiter bzw. ein blankes Leiterende zur Verfügung gestellt werden kann. Das blanke Leiterende kann anschließend mittels Greifbacken umgriffen werden. Hierbei ist ein zumindest teilweises, bevorzugt vollständig umlaufendes Umgreifen vorgeschlagen. Mit Hilfe der Greifbacken lassen sich die Litzen zumindest teilweise kompaktieren. Die kompaktierten Litzen werden anschließend mittels eines Lasers einer Laserstrahlquelle miteinander verschweißt, so dass ein kompakter Schweißknoten entsteht. Beim Verschweißen wird der Laser der Laserstrahlquelle durch das Material der Greifbacken hindurch oder durch Ausnehmungen in den Greifbacken hindurch auf die Litzen geleitet. Eine Laserstrahlquelle entgratet die verschweißten Litzen stirnseitig.

Nachfolgend wird der Gegenstand anhand einer Ausführungsbeispiele zeigenden Zeichnung näher erläutert. In der Zeichnung zeigen:
- Fig. 1a, b: ein Leiterende mit Litzen gemäß dem Stand der Technik im unbearbeiteten Zustand;
- Fig. 2a, b: ein Leiterende eines Litzenleiters im bearbeiteten Zustand gemäß Stand der Technik;
- Fig. 3a, b: die Bearbeitung eines Litzenleiters gemäß einem Ausführungsbeispiel;
- Fig. 4a-c: die Bearbeitung eines Litzenleiters gemäß eines weiteren Ausführungsbeispiels;
- Fig. 5: eine Ansicht eines bearbeiteten Litzenleiters gemäß einem Ausführungsbeispiel;
- Fig. 6a, b: ein Entgraten eines Litzenleiters nach einem Verschweißen gemäß einem Ausführungsbeispiel;
- Fig. 7a-d: ein Zerschneiden eines Litzenleiters vor einem Verschweißen gemäß einem Ausführungsbeispiel;
- Fig. 8: ein stumpfes Verschweißen eines Litzenleiters mit einem Anschlussteil gemäß einem Ausführungsbeispiel.

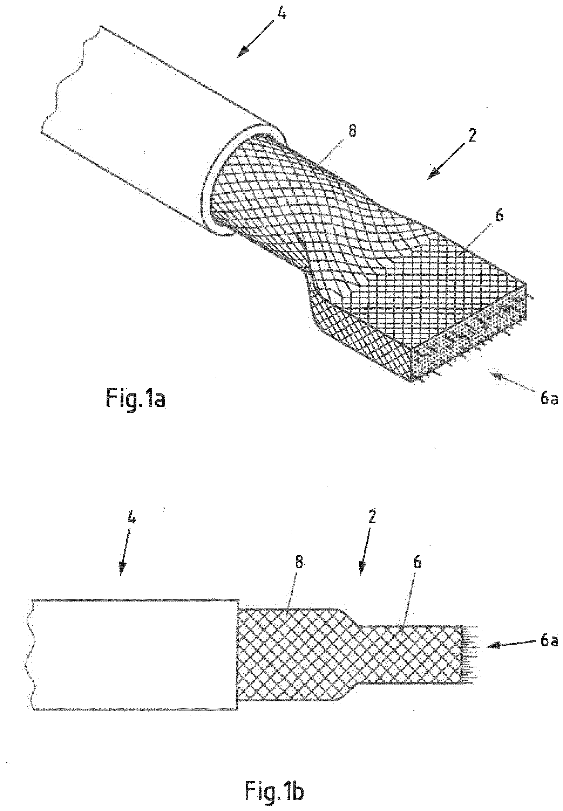

Fig. 1a zeigt eine Ansicht eines Leiterendes 2 eines Kabels 4. Das Leiterende 2 hat einen kompaktierten Bereich 6. Im kompaktierten Bereich 6 sind die Litzen 8 des Leiterendes 2 kompaktiert, insbesondere in der Form, dass ein Querschnittsprofil des Leiterendes 2 rechteckig ist. Der kompaktierte Bereich 6 ist insbesondere durch ein Widerstandsschweißen hergestellt worden.

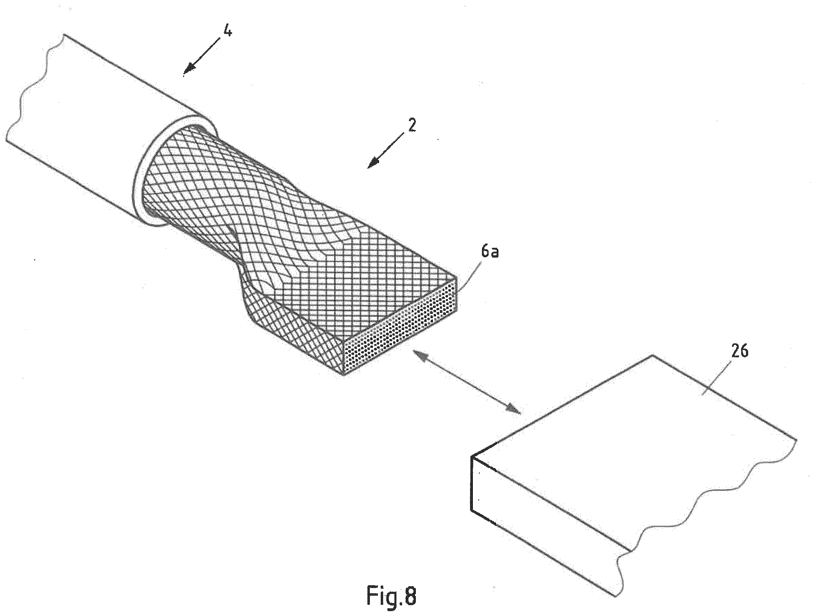

In der Fig. 1b ist zu erkennen, dass eine Stirnfläche 6a des kompaktierten Bereichs 6 aus weniger weit und weiter hervorstehenden Litzenenden der Litzen 8 gebildet ist. Die Ebenheit der Stirnfläche 8 liegt bei 2 bis 3mm. Dies ist für ein anschließendes stumpfes Verschweißen, wie es in Fig. 8 gezeigt ist, nicht geeignet.

Die unebene Stirnfläche 6a entsteht dadurch, dass während des Kompaktieren des kompaktierten Bereichs 6, die Litzen zueinander bewegt werden. Die Litzen 8 sind aufgrund der Struktur des Leiterendes 2 in der Regel verdrillt, verseilt oder in einer sonstigen Art und Weise ineinander verwoben. Durch das Kompaktieren wird diese Struktur verändert, so dass die Lagebeziehung der Litzen 8 zueinander verändert wird. Dadurch kommt es dazu, dass die Litzen 8 weiter und weniger weit an der Stirnfläche 6a hervorstehen.

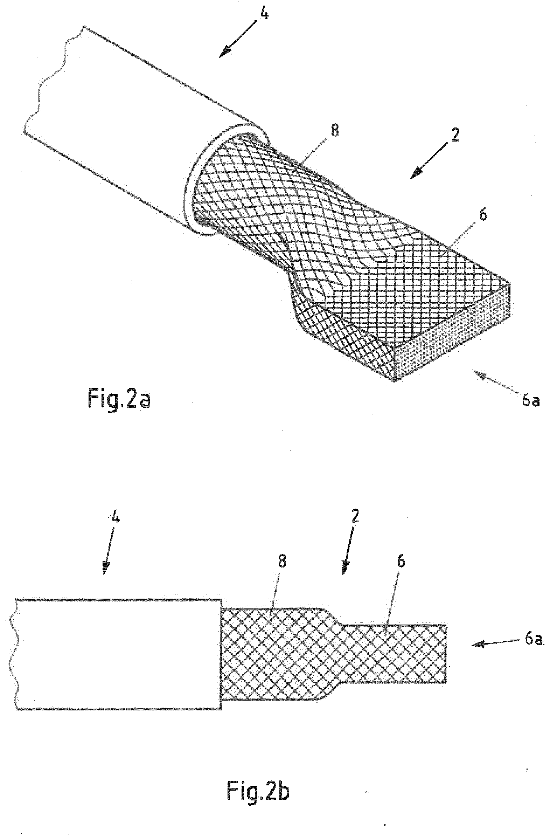

Um die Stirnfläche 6a nun für ein Verschweißen vorzubereiten, wird die Stirnfläche 6a, wie in der Fig. 2a gezeigt, nach dem Widerstandspunktschweißen nachbearbeitet, insbesondere durch ein Schneiden oder Fräsen. Wie in der Fig. 2b zu erkennen ist, wird hierdurch eine Ebenheit der Stirnfläche 6a von 0,5mm und weniger erreicht. Eine solche Stirnfläche 6a ist für das anschließende Stumpfverschweißen geeignet. Bei den bekannten Verfahren sind jedoch verschiedenste Werkzeuge notwendig, um die Stirnfläche 6a in der gezeigten Art und Weise vorzubereiten.

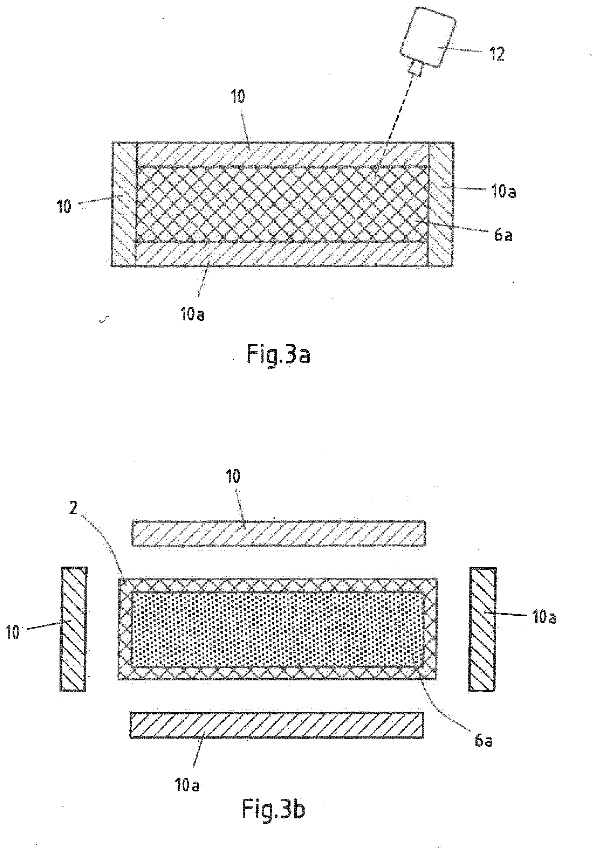

Erfindungsgemäß wird nunmehr vorgeschlagen, das Leiterende 2 mittels Laserschweißen vorzubereiten, wie in der Fig. 3a, b gezeigt ist.

Fig. 3a zeigt eine Draufsicht auf eine Stirnfläche 6a eines Leiterendes 2. Umfangseitig des Leiterendes 2 werden Greifbacken 10 in radialer Richtung zum Zentrum des Leiterendes 2 hin aufeinander zu bewegt und somit das Leiterende 2 kompaktiert. Es entsteht ein kompaktierter Bereich 6. Dabei können die Greifbacken 10 schwingungserregt sein, insbesondere mit einer Ultraschallschwingung, um einerseits die Litzen 8 des Leiters zueinander zu bewegen und somit deren räumliche Anordnung zueinander aufzulösen und andererseits um ein plastisches Verformen der Litzen 8 zueinander zu erleichtern. Die Greifbacken 10 sind so zueinander geformt, dass die Stirnfläche 6a bevorzugt ein rechteckiges Querschnittsprofil, wie gezeigt, erhält. Andere Formen sind denkbar und umfasst.

Nach dem Kompaktieren durch die Greifbacken 10 wird mittels eines Laserstrahls 12, aus einer nicht gezeigten Laserstrahlquelle, ein Verschweißen der Litzen 8 untereinander bewirkt. Hierbei durchdringt der Laserstrahl 12 die Greifbacken 10 und trifft somit unmittelbar auf die umfänglichen Litzen 8 im Bereich der Stirnfläche 6, insbesondere im kompaktieren Bereich 6 auf. Die Litzen 8 werden miteinander verschweißt.

Nach dem Verschweißen werden die Greifbacken 10 in einer radialen Richtung weg vom Zentrum des Leiterendes 2 auseinander bewegt, wie in Fig. 3b gezeigt. Zu erkennen ist, dass die Stirnfläche 6a ein gegenüber dem Leiterende 2 verkleinertes Querschnittsprofil hat. Die Litzen 8 sind im kompaktierten Bereich 6, insbesondere an der Stirnfläche 6a miteinander verschweißt.

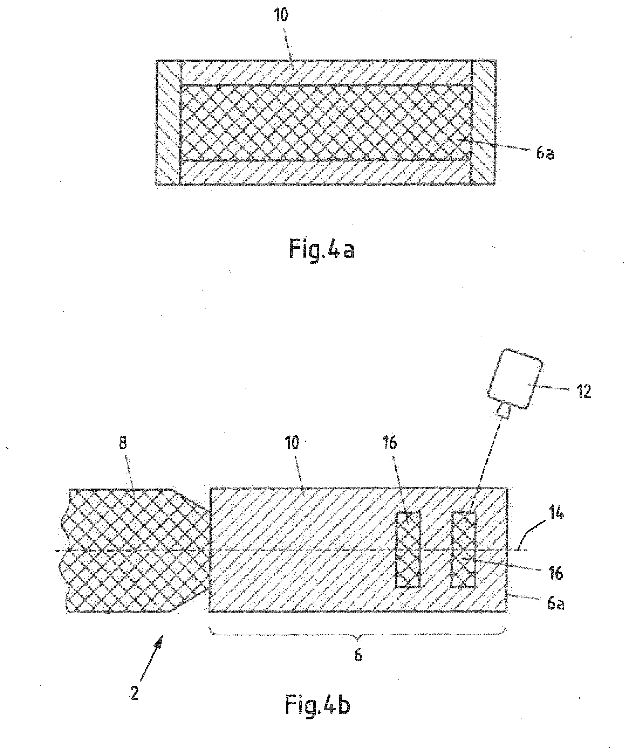

Das Verschweißen der Litzen 8 miteinander durch die Greifbacken 10 hindurch ist in einer bevorzugten Ausführungsform in den Fig. 4a-c nochmals dargestellt. Fig. 4a zeigt dabei die Greifbacken 10 und die Stirnfläche 6a gemäß der Fig. 3a.

In einer Draufsicht, welche in Fig. 4b gezeigt ist, ist zu erkennen, dass an einem Leiterende 2 in einem kompaktierten Bereich 6, die Greifbacken 10 auf den Litzen 8 aufliegen. Das Kabel 4 oder der Leiter 2 erstreckt sich in einer Längsrichtung 14. Ausgehend von einer Stirnfläche 6a in Längsrichtung 14 beabstandet von der Stirnfläche 6a, können in den Greifbacken 10 Schweißbereiche 16 vorgesehen sein. Es ist möglich, dass ein Schweißbereich 16 oder mehrere Schweißbereiche 16 in Längsrichtung 14 beabstandet voneinander in den Greifbacken 10 vorgesehen sind. Der Laserstrahl 12 durchdringt die Greifbacken 10 in den Schweißbereichen 16 und trifft unmittelbar auf die Litzen 8 des Leiterendes 2 auf.

Die Schweißbereiche 16 können durch Ausnehmungen in dem Material der Greifbacken 10 gebildet sein. Auch ist es möglich, dass die Schweißbereiche 16 durch ein transluszentes Material gebildet sind, durch das der Laserstrahl 12 durchtreten kann.

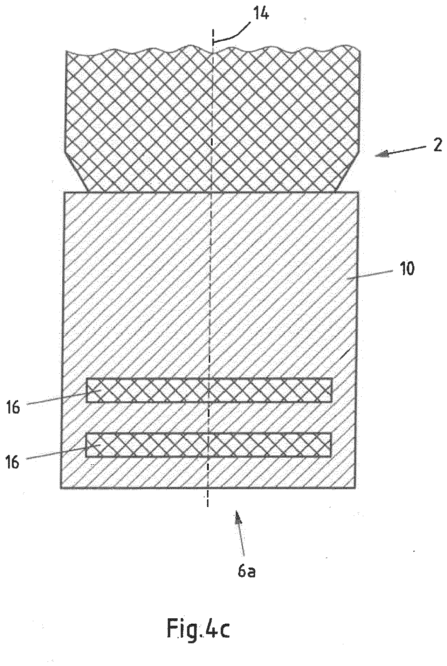

Fig. 4b zeigt eine Seitenansicht und Fig. 4c zeigt eine Draufsicht auf ein Leiterende 2. In der Fig. 4c ist entsprechend der Fig. 4b in eine Draufsicht zu erkennen, dass Schweißbereiche 16 an einem stirnseitigen Ende des Leiterendes 2 in den Greifbacken 10 vorgesehen sind. Auch in der Draufsicht können ein oder mehrere Schweißbereiche 16 vorgesehen sein. Die Anordnung der Schweißbereiche 16 relativ zur Längsrichtung 14 kann beabstandet voneinander sein.

Zu erkennen ist, dass sowohl in einer Seitenansicht als auch in einer Draufsicht jeweils Schweißbereiche 16 vorgesehen sind. Dies gilt bevorzugt für beide Seitenansichten, als auch für eine Draufsicht und eine Unteransicht, so dass die Schweißbereiche 16 bevorzugt umlaufend, jedoch nicht zwingend geschlossen umlaufend, an den Litzen 8 des Leiterendes 2 im kompaktierten Bereich 6 anliegen.

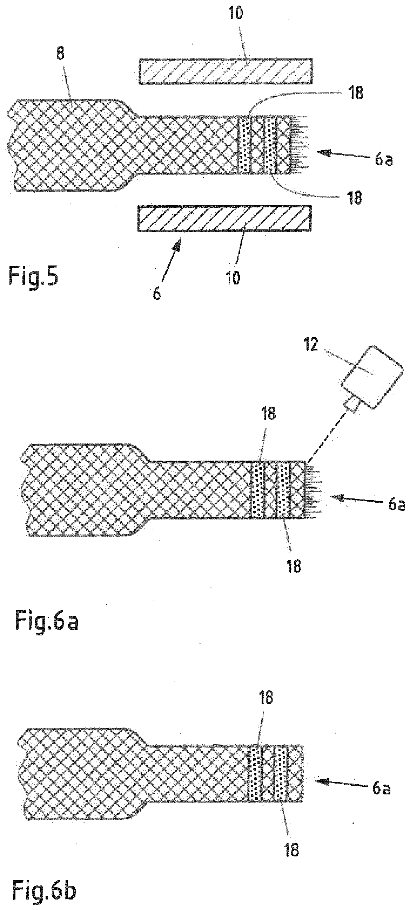

Gegenständlich wird nunmehr vorgeschlagen, dass, wie in der Fig. 6a gezeigt, mit bevorzugt demselben Laserstrahl 12, die Litzen 8 an der Stirnfläche 6 entfernt werden. Dieses Laserentgraten führt dazu, dass die Stirnfläche 6a, wie in der Fig. 6b gezeigt, eine Ebenheit von weniger als 1mm, bevorzugt weniger als 0,5mm aufweist. Diese Stirnfläche 6a ist geeignet für ein stumpfes Verschweißen mit einem Anschlussteil gemäß Fig. 8.

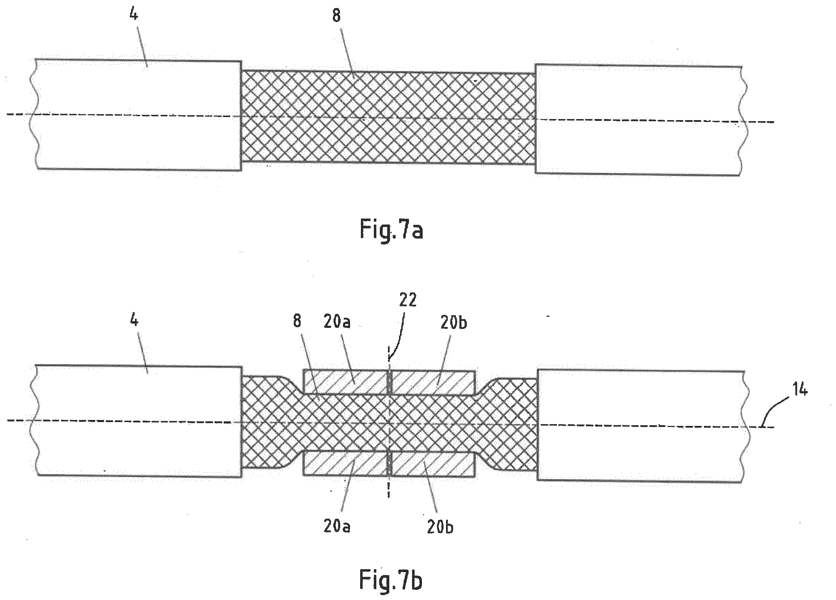

Alternativ zu dem Laserentgraten gemäß den Fig. 6a, b ist auch ein Schneidprozess denkbar. Ein solcher ist in den Fig. 7a-d gezeigt. Bevorzugt wird der Schneidprozess vor dem Verschweißen gemäß der Fig. 3 und 4 durchgeführt.

Wie in der Fig. 7a zu erkennen ist, wird das Kabel 4 entweder in einem zentralen Bereich oder stirnseitig abisoliert, so dass die blanken Litzen 8 vorliegen. An diese blanken Litzen 8 werden Pressbacken 20a, b angelegt. Die Pressbacken 20a, b haben einen Abstand in Längsrichtung 14 zueinander. Dies kann ein Spalt 22 sein, durch den eine Schneidkante verlaufen kann. Dies kann mittels eines Messers, eines Lasers oder eines sonstigen Schneidverfahrens durchgeführt werden.

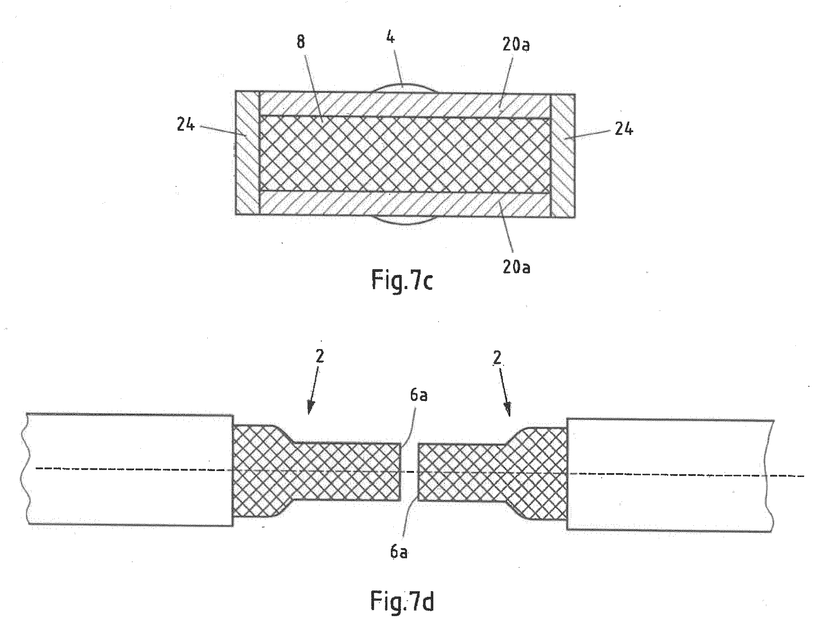

Fig. 7c zeigt die Pressbacken 20a in einem Querschnitt senkrecht zur Längsrichtung 14. Die Pressbacken 20a werden aufeinander gepresst und die Litzen 8 werden durch Seitenschieber 24 zueinander fixiert. Die so fixierten Litzen können mit einer Schneidvorrichtung durchtrennt werden, so dass, wie in Fig. 7d gezeigt, zumindest eine, bevorzugt zwei ebene Stirnflächen 6a gebildet sind. An diesem Leiterenden 2 kann anschließend das Verfahren gemäß der Fig. 3 und 4 durchgeführt werden.

Das Leiterende 2 des Kabels 4 wird anschließend mit seiner Stirnfläche 6a mit einem Anschlussteil 26, wie in der Fig. 8 gezeigt, stumpf verschweißt. Auch bei diesem stumpfen Verschweißen erfolgt das Verschweißen mittels des Laserstrahls 12. Das Leiterende 6 wird stumpf auf eine Oberfläche eines Anschlussteils 26 aufgelegt. Anschließend fährt der Laserstrahl 12 entlang der Grenzfläche zwischen der Stirnfläche 6a und der Oberfläche des Anschlussteils 26. Dadurch, dass die Stirnfläche 6a die beschriebene Ebenheit hat, hat der Laserstrahl 12 eine ausreichend große Angriffsfläche, um die Litzen 8 mit der Oberfläche des Anschlussteils 26 nahezu vollständig zu verschweißen.

Beim Verschweißen der Litzen untereinander im kompaktierten Bereich 6, beim Laserentgraten gemäß der Fig. 6, als auch beim Verschweißen gemäß der Fig. 8 kann eine einzige Laserstrahlquelle verwendet werden. Diese kann multifokal sein, so dass für den jeweiligen Anwendungsfall jeweils der geeignete Fokus eingestellt werden kann.

### Bezugszeichenliste

- 2: Leiterende
- 4: Kabel
- 6: kompaktierter Bereich
- 6a: Stirnfläche
- 8: Litzen
- 10: Greifbacken
- 12: Laserstrahl
- 14: Längsrichtung
- 16: Schweißbereich
- 18: Schweißknoten
- 20a,b: Pressbacken
- 22: Spalt
- 24: Seitenschieber
- 26: Anschlussteil

## Patentansprüche

1. Verfahren zum Bearbeiten eines elektrischen Leiters bei dem,
- ein blankes Leiterende (2) eines Litzenleiters bereitgestellt wird,
- die Litzen (8) des blanken Leiterendes (2) von Greifbacken (10) zumindest teilweise umlaufend umgriffen werden,
- die Litzen (8) im Bereich des Leiterendes (2) durch die Greifbacken (10) zumindest teilweise kompaktiert werden, und
- die kompaktierten Litzen (8) mit Hilfe einer Laserstrahlquelle im Bereich der Greifbacken (10), durch die Greifbacken (10) hindurch, miteinander verschweißt werden,
**dadurch gekennzeichnet,**
- **dass** die kompaktierten, miteinander verschweißten Litzen (8) nach dem Verschweißen stirnseitig mit Hilfe einer Laserstrahlquelle entgratet werden.

2. Verfahren nach Anspruch 1,
**dadurch gekennzeichnet,**
- **dass** die Greifbacken (10) zumindest in Schweißbereichen (16) aus einem für einen aus der Laserstrahlquelle austretenden Laserstrahl (12) zumindest teilweise transluszenten Material gebildet sind und die kompaktierten Litzen (8) in den Schweißbereichen (16) durch die Greifbacken (10) hindurch miteinander verschweißt werden oder
- **dass** die Greifbacken (10) zumindest in Schweißbereichen (16) durchgehende Ausnehmungen aufweisen und die kompaktierten Litzen (8) in den Schweißbereichen (16) durch die Greifbacken (10) hindurch miteinander verschweißt werden.

3. Verfahren nach einem der vorangehenden Ansprüche,
**dadurch gekennzeichnet,**
- **dass** die Greifbacken (10) das Leiterende (2) an einem stirnseitigen Ende umgreifen.

4. Verfahren nach einem der vorangehenden Ansprüche,
**dadurch gekennzeichnet,**
- **dass** die kompaktierten Litzen (8) mit Hilfe der Laserstrahlquelle an einem Umfang der Greifbacken (10), durch die Greifbacken (10) hindurch miteinander verschweißt werden und/oder
- **dass** die kompaktierten Litzen (8) mit Hilfe der Laserstrahlquelle an einander gegenüberliegenden Backen der Greifbacken (10), durch die Greifbacken (10) hindurch miteinander verschweißt werden.

5. Verfahren nach einem der vorangehenden Ansprüche,
**dadurch gekennzeichnet,**
- **dass** die Litzen (8) mit Hilfe der Greifbacken (10) zu einem mehreckigen, insbesondere rechteckigen Querschnittsprofil kompaktiert werden.

6. Verfahren nach einem der vorangehenden Ansprüche,
**dadurch gekennzeichnet,**
- **dass** zumindest zwei Schweißbereiche (16) in Längsrichtung des Litzenleiters voneinander beabstandet in den Greifbacken (10) angeordnet sind.

7. Verfahren nach einem der vorangehenden Ansprüche,
**dadurch gekennzeichnet,**
- **dass** die Greifbacken (10) nach dem Umgreifen schwingungsangeregt werden, insbesondere mit hochfrequenten Schwingungen.

8. Verfahren nach einem der vorangehenden Ansprüche,
**dadurch gekennzeichnet,**
- **dass** eine Stirnfläche (6a) des Litzenleiters nach dem Entgraten eine Ebenheit von maximal 1mm, bevorzugt von maximal 0,5mm aufweist.

9. Verfahren nach einem der vorangehenden Ansprüche,
**dadurch gekennzeichnet,**
- **dass** die Litzen (8) vor dem Kompaktieren von einer Schneidvorrichtung umfasst werden und an einem stirnseitigen Ende im Wesentlichen plan abgetrennt werden und/oder
- **dass** die Litzen (8) durch die Schneidvorrichtung vor dem Abtrennen schwingungsangeregt werden und dadurch zueinander zumindest in Teilen entdrillt werden.

10. Verfahren nach einem der vorangehenden Ansprüche,
**dadurch gekennzeichnet,**
- **dass** nach dem Verschweißen der Litzenleiter mit Hilfe einer Laserstrahlquelle mit seinem verschweißten Leiterende (2) stumpf mit einem Anschlussteil (26) verschweißt wird.

11. Verfahren nach Anspruch 10,
**dadurch gekennzeichnet,**
- **dass** das Verschweißen der Litzen (8) und das stumpfe Verschweißen mit dem Anschlussteil (26) mit Hilfe derselben Laserstrahlquelle durchgeführt werden und/oder
- **dass** das Verschweißen der Litzen (8) und das Entgraten mit Hilfe derselben Laserstrahlquelle durchgeführt wird.

12. Verfahren nach Anspruch 10,
**dadurch gekennzeichnet,**
- **dass** die Laserstrahlquelle multifokal eingestellt wird, derart, dass ein Fokus der Laserstrahlquelle beim Verschweißen der Litzen (8), beim optionalen Entgraten und beim optionalen stumpfen Verschweißen mit dem Anschlussteil (26) zueinander verschieden eingestellt wird.

13. Bearbeitungsvorrichtung für Litzenleiter umfassend:
- eine Bereitstellungseinrichtung eingerichtet zum Bereitstellen eines blanken Leiterendes (2) eines Litzenleiters,
- Greifbacken (10) eingerichtet zum zumindest teilweise umlaufenden Umgreifen der Litzen (8) des blanken Leiterendes (2), derart, dass die Litzen (8) im Bereich des Leiterendes (2) durch die Greifbacken (10) zumindest teilweise kompaktiert werden, und
- eine Laserstrahlquelle eingerichtet zum miteinander Verschweißen der kompaktierten Litzen (8) der Greifbacken (10), durch die Greifbacken (10) hindurch verschweißt
**dadurch gekennzeichnet,**
- eine Laserstrahlquelle die verschweißten Litzen (8) stirnseitig entgratet.

14. Bearbeitungsvorrichtung nach Anspruch 13,
**dadurch gekennzeichnet,**
- **dass** die Greifbacken (10) aus einem zumindest abschnittsweise für einen Laserstrahl der Laserstrahlquelle transluszenten Material gebildet sind.

15. Bearbeitungsvorrichtung nach Anspruch 13 oder 14,
**dadurch gekennzeichnet,**
- **dass** die Laserstrahlquelle multifokal ist, derart, dass der Laser während aufeinanderfolgender Arbeitsschritte mit einem verschiedenen Fokus einstellbar ist.

## Claims

1. Method of processing an electrical conductor in which,
- a bare conductor end (2) (2) of a stranded conductor is provided,
- the strands (8) of the bare conductor end (2) (2) are gripped at least partially circumferentially by gripping jaws (10),
- the strands (8) are at least partially compacted in the region of the conductor end (2) (2) by the gripping jaws (10), and
- the compacted strands (8) are welded together with the aid of a laser beam source in the region of the gripping jaws (10), through the gripping jaws (10), **characterised in**
- **that** the compacted strands (8) welded to one another are deburred on a front face after welding with the aid of a laser beam source.

2. Method according to claim 1,
**characterised in**
- **that** the gripping jaws (10) are formed, at least in welding regions (16), from a material which is at least partially translucent for a laser beam (12) emerging from the laser beam source, and the compacted strands (8) are welded to one another in the welding regions (16) through the gripping jaws (10), and/or
- **that** the gripping jaws (10) have through recesses at least in welding regions (16) and the compacted strands (8) are welded to one another in the welding regions (16) through the gripping jaws (10).

3. Method according to one of the preceding claims,
**characterized in**
- **that** the gripping jaws (10) grip around the conductor end (2) at a front face.

4. Method according to one of the preceding claims,
**characterized in**
- **that** the compacted strands (8) are welded together by means of the laser beam source at a perimeter of the gripping jaws (10), through the gripping jaws (10) and/or
- **that** the compacted strands (8) are welded together with the aid of the laser beam source at mutually opposite jaws (10) of the gripping jaws (10), through the gripping jaws (10).

5. Method according to one of the preceding claims,
**characterised in**
- **that** the strands (8) are compacted with the aid of the gripping jaws (10) to form a polygonal, in particular rectangular, cross-sectional profile.

6. Method according to one of the preceding claims,
**characterized in**
- **that** at least two welding regions (16) are arranged in the gripping jaws (10) spaced apart from one another in the longitudinal direction of the stranded conductor.

7. Method according to one of the preceding claims,
**characterized in**
- **that** the gripping jaws (10) are vibrationally excited after gripping, in particular with high-frequency vibrations.

8. Method according to one of the preceding claims,
**characterised in**
- **that** a front face (6a) of the stranded conductor after deburring has a evenness of at most 1 mm, preferably at most 0.5 mm.

9. Method according to one of the preceding claims,
**characterized in**
- **that** the strands (8) are embraced by a cutting device prior to compacting and are cut off substantially flat at a front face and/or
- **that** the strands (8) are vibrationally excited by the cutting device prior to cutting and are thereby at least partially untwisted relative to one another.

10. Method according to one of the preceding claims,
**characterized in**
- **that**, after welding, the stranded conductor is butt-welded with its welded conductor end (2) to a connecting part by means of a laser beam source.

11. Method according to claim 10,
**characterized in**
- **that** the welding of the strands (8) and the butt welding to the connecting part (26) are carried out with the aid of the same laser beam source and/or
- **that** the welding of the strands (8) and the deburring are carried out with the aid of the same laser beam source.

12. Method according to claim 10,
**characterized in**
- **that** the laser beam source is adjusted multifocally in such a way that a focus of the laser beam source is adjusted differently from each other during the welding of the strands (8), during the optional deburring and during the optional butt welding to the connecting part.

13. Processing device for stranded conductors comprising:
- a supply device arranged for supplying a bare conductor end (2) of a stranded conductor,
- gripping jaws (10) arranged for at least partially circumferentially gripping the strands (8) of the bare conductor end (2) in such a way that the strands (8) are at least partially compacted in the region of the conductor end (2) by the gripping jaws (10), and
- a laser beam source arranged for welding together the compacted strands (8) of the gripping jaws (10), through the gripping jaws (10)
**characterized in**
- **that** the laser beam source deburrs the welded strands (8) at a front face.

14. Processing device according to claim 13,
**characterized in**
- **that** the gripping jaws (10) are formed from a material which is translucent, at least in parts, to a laser beam from the laser beam source.

15. Processing device according to claim 13 or 14,
**characterized in**
- **that** the laser beam source is multifocal, such that the laser is adjustable with a different focus during successive working steps.

## Revendications

1. Méthode de traitement d'un conducteur électrique dans lequel,
- une extrémité de conducteur nue (2) d'un conducteur torsadé est mise à disposition,
- les torons (8) de l'extrémité de conducteur nue (2) sont au moins partiellement entourés sur leur pourtour par des mâchoires de préhension (10),
- les torons (8) sont au moins partiellement compactés dans la zone de l'extrémité du conducteur (2) par les mâchoires de préhension (10), et
- les torons (8) compactés sont soudés entre eux à l'aide d'une source de rayonnement laser dans la zone des les mâchoires de préhension (10), en passant par les mâchoires de préhension (10),
**caractérisé en ce**
- **que** les torons (8) compactés, soudés entre eux sont, après le soudage, ébavurés sur leur face frontale à l'aide d'une source de rayonnement laser.

2. Méthode selon la revendication 1,
**caractérisé en ce,**
- les mâchoires de préhension (10) sont formées, au moins dans des zones de soudage (16), d'un matériau au moins partiellement translucide pour un faisceau laser (12) sortant de la source de rayonnement laser et que les torons compactés (8) sont soudés entre eux dans les zones de soudage (16) à travers les mâchoires de préhension (10) ou
- que les mâchoires de préhension (10) ont des évidements traversants au moins dans des zones de soudage (16) et que les torons compactés (8) sont soudés entre eux dans les zones de soudage (16) à travers les mâchoires de préhension (10).

3. Méthode selon l'une des revendications précédentes,
**caractérisé en ce**
- **que** les mâchoires de préhension (10) entourent l'extrémité du conducteur (2) à une extrémité frontale.

4. Méthode selon l'une des revendications précédentes,
**caractérisé en ce**
- **que** les torons compactés (8) sont soudés entre eux à l'aide de la source de rayonnement laser sur une périphérie des mâchoires de préhension (10), à travers les mâchoires de préhension (10) et/ou
- **que** les torons compactés (8) sont soudés les uns aux autres à l'aide de la source de rayonnement laser sur des mâchoires opposées des mâchoires de préhension (10), à travers les mâchoires de préhension (10).

5. Méthode selon l'une des revendications précédentes,
**caractérisé en ce que**
- que les torons (8) sont soudés à l'aide des mâchoires de préhension (10) sont compactés dans un profil de section d'un polygone, en particulier un profil rectangulaire.

6. Méthode selon l'une des revendications précédentes,
**caractérisé en ce**
- **qu'**au moins deux zones de soudage (16) dans la direction longitudinale du conducteur toronné sont disposées à une certaine distance l'une de l'autre dans les mâchoires de préhension (10).

7. Méthode selon l'une des revendications précédentes,
**caractérisé en ce**
- **que** les mâchoires de préhension (10) sont excitées par des vibrations après l'entourage, en particulier avec des vibrations à haute fréquence.

8. Méthode selon l'une des revendications précédentes,
**caractérisé en ce que**
- qu'une surface frontale (6a) du conducteur toronné a, après l'ébavurage, une planéité de 1 mm au maximum, de préférence de 0,5 mm au maximum.

9. Méthode selon l'une des revendications précédentes,
**caractérisé en ce**
- **que** les torons (8) sont entourés, avant le compactage, par un dispositif de coupe et sont coupés à une extrémité frontale de manière essentiellement plane et/ou
- **que** les torons (8) sont soumis à des vibrations par le dispositif de coupe avant la séparation et sont ainsi au moins partiellement détoronnés les uns par rapport aux autres.

10. Méthode selon l'une des revendications précédentes,
**caractérisé en ce que**
- qu'après le soudage, le conducteur toronné est soudé bout à bout à une pièce de raccordement (26) à l'aide d'une source de rayonnement laser avec son extrémité de conducteur soudée (2).

11. Méthode selon la revendication 10,
**caractérisé en ce**
- **que** le soudage des torons (8) et le soudage bout à bout avec la pièce de raccordement (26) sont réalisés à l'aide de la même source de rayonnement laser et/ou
- **que** le soudage des torons (8) et l'ébavurage sont réalisés à l'aide de la même source de rayonnement laser.

12. Méthode selon la revendication 10,
**caractérisé en ce**
- **que** la source de rayonnement laser est réglée de manière multifocale, de sorte qu'une focalisation de la source de rayonnement laser est réglé différemment l'un de l'autre lors du soudage des torons (8), de l'ébavurage optionnel et du soudage bout à bout optionnel avec la pièce de raccordement (26).

13. Dispositif de traitement pour conducteurs toronnés comprenant :
- un dispositif de mise à disposition configuré pour mettre à disposition une extrémité de conducteur nue (2) d'un conducteur toronné,
- des mâchoires de préhension (10) aménagées pour entourer au moins partiellement les torons (8) de l'extrémité de conducteur nue (2), de telle sorte que les torons (8) sont au moins partiellement compactés par les mâchoires de préhension (10) dans la zone de l'extrémité de conducteur (2), et
- une source de rayon laser aménagée pour souder entre eux les torons compactés (8) des mâchoires de préhension (10), à travers les mâchoires de préhension (10), **caractérisé en ce**
- **qu'**une source de rayonnement laser ébarbe les torons soudés (8) sur leur face frontale.

14. Dispositif de traitement selon la revendication 13,
**caractérisé en ce**
- **que** les mâchoires de préhension (10) sont constituées d'un matériau au moins partiellement perméable pour un faisceau laser de la source de rayonnement laser.

15. Dispositif d'usinage selon la revendication 13 ou 14,
**caractérisé en ce**
- **que** la source de rayonnement laser est multifocale, de telle sorte que le laser est réglable, pendant des étapes de travail successives avec une focalisation différente.
